# EUROPEAN PATENT APPLICATION

(11) **EP 4 692 255 A1**
(43) Date of publication of application: **11.02.2026**
(21) Application number: 24779810.1
(22) Date of filing: 21.03.2024
(51) Int. Cl.: C09D 11/38, B41J 2/01, B41J 2/21, B41M 5/00, C09D 11/322, C09D 11/40

(54) **AQUEOUS INK COMPOSITION, INK SET, AND METHOD FOR PRODUCING INKJET-PRINTED MATTER**

(30) Priority: 24.03.2023 JP 2023048009; 24.03.2023 JP 2023048010; 30.01.2024 JP 2024011611; 30.01.2024 JP 2024011612
(71) Applicant: Nippon Kayaku Kabushiki Kaisha, Tokyo 100-0005 (JP)
(72) Inventor: ISHII, Toru, Tokyo 115-8588 (JP)
(74) Representative: Maiwald GmbH
(86) International application number: PCT/JP2024/010936
(87) International publication number: WO 2024/203687

(57) **Abstract**

Provided is an aqueous ink composition comprising a non-white colorant, a water-soluble organic solvent, a humectant, a surfactant, and water, wherein the humectant comprises a sugar alcohol, the water-soluble organic solvent comprises one or more specific solvents each having a ClogP value of 0.5-2.0, the content of the water-soluble organic solvent is 0-5 mass%, excluding 0 mass%, and the content of a water-soluble organic solvent having a boiling point of 250°C or lower at 1 atm is 3 mass% or less. Also provided are: an ink set including the aqueous ink composition; and a method for producing an inkjet-printed matter using the aqueous ink composition.

## Description

### TECHNICAL FIELD

The present invention relates to an aqueous ink composition, an ink set, and a method for producing an inkjet-printed matter.

### BACKGROUND ART

Known production methods of a cardboard box include a preprinting procedure. The preprinting procedure includes, in sequential order, a printing step of performing printing on liner paper or coated cardboard wound into a roll, a gluing step of gluing the printed liner paper or coated cardboard and a corrugating medium together to obtain a cardboard sheet, and a box-making step of making a cut on the resulting cardboard sheet and forming a cardboard box.

In the preprinting procedure, analogue printing using a solvent-based flexographic ink or a solvent-based gravure ink is mainly employed. However, the ink used in the analogue printing contains a large amount of volatile organic solvent, and has the drawback of enormous burdens on the environment and the human body due to the volatilized organic solvent. In addition, the analogue printing requires platemaking, which leads to the drawbacks of an increase in cost and a long lead time prior to printing. Thus, there is a demand for an inkjet-printing-based preprinting procedure which requires no platemaking and allows for on-demand printing, and, furthermore, employs an aqueous ink containing as little volatile organic solvent as possible.

Generally, when the inkjet printing is performed using an ink containing a reduced amount of volatile organic solvent(s), the ink may dry in a nozzle of a print head, and cause nozzle clogging. In this regard, in the preprinting procedure where the printing step to the box-making step are sequentially performed, any printing trouble due to nozzle clogging or the like can affect the steps after the printing step.

In addition, in the gluing step of gluing the liner paper or coated cardboard and the corrugating medium via an adhesive or the like, that is, a corrugator-treatment step, which is a production step unique to cardboard production, the ink-printed surface of the liner paper or coated cardboard is exposed to a severe heat condition in which the ink-printed surface is in direct contact with heating means (a heating/pressing roll, a hot plate, or the like). Under the heat condition, there may occur the problems of the fusion of the ink layer to the heating means and the consequent failure of the production of a cardboard sheet, or the occurrence of cracks or the like in the ink layer due to the fusion and the consequent deterioration in quality, etc. In particular, in printing on a surface-coated substrate such as a coated cardboard, a serious problem of the transfer of the ink to the heating means or the like may occur due to insufficient permeability, insufficient fixability, poor drying property, or the like of the ink.

Furthermore, in the case of inkjet printing on liner paper, an aqueous white ink may be applied, followed by the application of an aqueous color ink, for enhanced decorative purposes. In this case, the aqueous color ink may sink into the ink layer of the aqueous white ink, which may cause a problem of a reduction in dot diameter of the aqueous color ink and the deterioration of the color developability.

In view of such circumstances, there is a strong demand from the market for an aqueous ink for inkjet recording, the aqueous ink containing a reduced amount of volatile organic solvent(s) but being less likely to cause nozzle clogging, being less likely to cause transfer even in printing on liner paper or a surface-coated substrate, and exhibiting favorable color developability even in application on an ink layer of an aqueous white ink.

Patent Document 1 discloses liner paper having an ink receiving layer suitable for corrugator-treatment, provided on a surface of a liner base paper. However, the technique of Patent Document 1 requires the use of the liner paper provided with an ink receiving layer, and incurs a higher cost than the case of using ordinary liner paper. Therefore, an improvement of the aqueous ink itself is desired so that ordinary liner paper can be used.

Patent Document 2 discloses a recording method in which an inkjet head having a circulation mechanism is used. Patent Document 3 discloses an aqueous ink containing a large amount of solvent and sorbitol. Patent Document 4 discloses an ink composition having a total content of a pigment, a pigment dispersion resin, polymer particles, and water of 95.0% by mass or more with respect to the entire composition.

### Citation List

### Patent Document

Patent Document 1: Japanese Unexamined Patent Application, Publication No. 2006-150694
Patent Document 2: Japanese Unexamined Patent Application, Publication No. 2021-154610
Patent Document 3: Japanese Patent No. 6787264
Patent Document 4: Japanese Unexamined Patent Application, Publication No. 2020-105481

### DISCLOSURE OF THE INVENTION

### Problems to be Solved by the Invention

An object of the present invention is to provide: an aqueous ink composition for inkjet recording, the aqueous ink composition containing a reduced amount of volatile organic solvent(s), being less likely to cause nozzle clogging, being less likely to cause transfer even in printing on liner paper or a surface-coated substrate, and exhibiting favorable color developability even in application on an ink layer of an aqueous white ink; an ink set including the aqueous ink composition; and a method for producing an inkjet-printed matter using the aqueous ink composition.

### Means for Solving the Problems

Specific means for solving the aforementioned problems include the following embodiments.
<1> An aqueous ink composition comprising a non-white colorant, a water-soluble organic solvent, a humectant, a surfactant, and water, wherein
   the humectant comprises a sugar alcohol,
   the water-soluble organic solvent comprises one or more specific solvents having a ClogP value of 0.5 or more and 2.0 or less,
   the content of the water-soluble organic solvent is more than 0% by mass and 5% by mass or less, and
   the content of the water-soluble organic solvent having a boiling point at 1 atm of 250°C or less is 3% by mass or less.
<2> The aqueous ink composition according to <1>, wherein the content of the sugar alcohol is 4% by mass or more and 10% by mass or less.
<3> The aqueous ink composition according to <1> or <2>, wherein the sugar alcohol comprises sorbitol.
<4> An ink set comprising the aqueous ink composition according to any one of <1> to <3>, and an aqueous white ink composition comprising a white colorant and water.
<5> The ink set according to <4>, wherein the white colorant comprises titanium oxide.
<6> A method for producing an inkjet-printed matter, the method comprising: ejecting droplets of the aqueous ink composition according to any one of <1> to <3> from an inkjet head; and attaching the droplets to a printing medium to obtain a printed matter.
<7> The method for producing an inkjet-printed matter according to <6>, wherein the printing medium is at least one selected from the group consisting of cardboard, liner paper, and coated cardboard.
<8> The method for producing an inkjet-printed matter according to <6>, wherein the printing medium is coated paper.
<9> A method for producing an inkjet-printed matter, the method comprising, in sequential order: a printing step of ejecting droplets of the aqueous ink composition according to any one of <1> to <3> from an inkjet head in a single-pass manner and attaching the droplets to liner paper or coated cardboard to obtain a printed matter; and a gluing step of gluing the printed matter and a corrugating medium together to obtain a cardboard sheet.
<10> The method for producing an inkjet-printed matter according to <9>, wherein the printing step comprises attaching droplets of an aqueous white ink composition comprising a white colorant and water to the liner paper or the coated cardboard, and subsequently attaching the droplets of the aqueous ink composition to the liner paper or the coated cardboard to obtain the printed matter.

### Effects of the Invention

The present invention can provide: an aqueous ink composition for inkjet recording, the aqueous ink composition containing a reduced amount of volatile organic solvent(s) but being less likely to cause nozzle clogging, being less likely to cause transfer even in printing on liner paper or a surface-coated substrate, and exhibiting favorable color developability even in application on an ink layer of an aqueous white ink; an ink set including the aqueous ink composition; and a method for producing an inkjet-printed matter using the aqueous ink composition.

### PREFERRED MODE FOR CARRYING OUT THE INVENTION

Hereinafter, specific embodiments to which the present invention is applied will be described in detail. In this specification, "C.I." means "color index". In addition, in this specification, the term "(meth)acrylic acid" means both "acrylic acid" and "methacrylic acid". The same applies to the term "(meth)acrylate" or the like.

### <<Aqueous Ink Composition>>

The aqueous ink composition according to the present embodiment contains a non-white colorant, a water-soluble organic solvent, a humectant, a surfactant, and water. The humectant contains a sugar alcohol. The water-soluble organic solvent includes a specific solvent having a ClogP value of 0.5 or more and 2.0 or less. The content of the water-soluble organic solvent is more than 0% by mass and 5% by mass or less, and the content of the water-soluble organic solvent having a boiling point at 1 atm of 250°C or less is 3% by mass or less.

In the following, the components contained in the aqueous ink composition according to the present embodiment will be described in detail. It should be noted that each component below may be used alone or in combination of two or more types thereof.

### <Non-White Colorant>

The aqueous ink composition according to the present embodiment contains a non-white colorant. Examples of the non-white colorant include pigments, disperse dyes, and solvent dyes. Among these, the pigments are preferable from the viewpoint of image fastness such as light-fastness and water-fastness of a recorded image. The pigment is exemplified by an inorganic pigment, an organic pigment, and an extender pigment, etc.

Examples of the inorganic pigment include carbon blacks, metal oxides, metal hydroxides, metal sulfides, metal ferrocyanides, metal chlorides, etc.

When the ink composition is a black ink composition, the inorganic pigment is preferably carbon black such as furnace black, lamp black, acetylene black, or channel black. Examples of commercially available products of the carbon black include: Raven 760 ULTRA, Raven 780 ULTRA, Raven 790 ULTRA, Raven 1060 ULTRA, Raven 1080 ULTRA, Raven 1170, Raven 1190 ULTRA II, Raven 1200, Raven 1250, Raven 1255, Raven 1500, Raven 2000, Raven 2500 ULTRA, Raven 3500, Raven 5000 ULTRA II, Raven 5250, Raven 5750, Raven 7000 (each from Columbia Carbon); Monarch 700, Monarch 800, Monarch 880, Monarch 900, Monarch 1000, Monarch 1100, Monarch 1300, Monarch 1400, Regal 1330R, Regal 1400R, Regal 1660R, Mogul L (each from Cabot Corporation); Color Black FW1, Color Black FW2, Color Black FW2V, Color Black FW200, Color Black S150, Color Black S160, Color Black S170, Printex 35, Printex U, Printex V, Printex 140U, Printex 140V, SpecIal Black 4, SpecIal Black 4A, SpecIal Black 5, Special Black 6, Nerox305, Nerox505, Nerox510, Nerox600, Nerox605, NIPex180IQ, NIPex170IQ, NIPex160IQ, NIPex150IQ (each from Orion Engineered Carbons); MA7, MA8, MA100, MA600, MCF-88, No. 25, No. 33, No. 40, No. 47, No. 52, No. 900, No. 2300 (each from Mitsubishi Chemical Corporation); and the like.

Examples of the organic pigment include pigments of various types including azo, disazo, phthalocyanine, quinacridone, isoindolinone, dioxazine, perylene, perynone, thioindigo, anthraquinone, quinophtharone. Specific examples of the organic pigment include: yellow pigments such as C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, 202, and 213; red pigments such as C.I. Pigment Red 5, 7, 12, 48, 48:1, 57, 88, 112, 122, 123, 146, 149, 150, 166, 168, 177, 178, 179, 184, 185, 202, 206, 207, 254, 255, 257, 260, 264, and 272; blue pigments such as C.I. Pigment Blue 1, 2, 3, 15, 15:1, 15:2, 15:3, 15:4, 15:6, 16, 22, 25, 60, 66, and 80; violet pigments such as C.I. Pigment Violet 19, 23, 29, 37, 38, and 50; orange pigments such as C.I. Pigment Orange 13, 16, 68, 69, 71, and 73; green pigments such as C.I. Pigment Green 7, 36, and 54; black pigments such as C.I. Pigment Black 1; and the like.

Examples of the extender pigment include silica, calcium carbonate, talc, clay, barium sulfate, white carbon, etc.

Among the pigments described above, the inorganic pigment is preferably carbon black. The organic pigment is preferably at least one selected from the group consisting of C.I. Pigment Blue 15:3, 15:4; C.I. Pigment Yellow 74, 155; C.I. Pigment Red 122, 150; and C.I. Pigment Violet 19, and more preferably at least one selected from the group consisting of C.I. Pigment Blue 15: 4; C.I. Pigment Yellow 155; C.I. Pigment Red 122, 150; and C.I. Pigment Violet 19. When a pigment is used as the non-white colorant, two or more types of pigments having different hues may be used in combination for the purpose of adjusting hue or the like.

Specific examples of the disperse dye include: yellow dyes such as C.I. Disperse Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 184:1, 182, 183, 184, 186, 192, 198, 199, 201, 202, 204, 210, 211, 215, 216, 218, 224, 231, 232, and 241; orange dyes such as C.I. Disperse Orange 1, 3, 5, 7, 11, 13, 17, 20, 21, 25, 26, 29, 30, 31, 32, 33, 37, 38, 42, 43, 44, 45, 47, 48, 50, 53, 54, 55, 56, 57, 58, 59, 61, 66, 76, 78, 80, 89, 90, 91, 93, 96, 97, 119, 127, 130, 139, and 142; red dyes such as C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, 328, 343, 362, and 364; violet dyes such as C.I. Disperse Violet 1, 4, 8, 17, 23, 26, 27, 28, 31, 33, 35, 36, 38, 40, 43, 46, 48, 50, 51, 52, 56, 57, 59, 61, 63, 69, and 77; green dyes such as C.I. Disperse Green 6:1, and 9; brown dyes such as C.I. Disperse Brown 1, 2, 4, 9, 13, 19, 26, 27; blue dyes such as C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 332, 333, 334, 343, 359, and 360; black dyes such as C.I. Disperse Black 1, 3, 10, and 24; and the like.

Specific examples of the solvent dye include: yellow dyes such as C.I. Solvent Yellow 2, 6, 14, 16, 21, 25, 29, 30, 33, 51, 56, 77, 80, 82, 88, 89, 93, 116, 150, 160:1, 163, and 179; orange dyes such as C.I. Solvent Orange 1, 2, 14, 45, and 60; red dyes such as C.I. Solvent Red 1, 3, 7, 8, 9, 18, 19, 23, 24, 25, 27, 49, 100, 109, 121, 122, 125, 127, 130, 132, 135, 218, 225, and 230; violet dyes such as C.I. Solvent Violet 13, and 31; green dyes such as C.I. Solvent Green 3; brown dyes such as C.I. Solvent Brown 3, and 5; blue dyes such as C.I. Solvent Blue 2, 11, 14, 24, 25, 35, 36, 38, 48, 55, 59, 63, 67, 68, 70, 73, 83, 105, 111, and 132; black dyes such as C.I. Solvent Black 3, 5, 7, 23, 27, 28, 29, and 34; and the like.

The content of the non-white colorant in the aqueous ink composition according to the present embodiment is typically 0.5% by mass or more and 30% by mass or less, preferably 1% by mass or more and 10% by mass or less, more preferably 2% by mass or more and 7% by mass or less, still more preferably 3% by mass or more and 7% by mass or less, and particularly preferably 3% by mass or more and 6% by mass or less. By selecting such a content, the storage stability and printing stability of the aqueous ink composition tends to improve as does the rubfastness of the printed image, and additionally, when applied over an ink layer of an aqueous white ink composition, dot diameter is less likely to decrease and favorable color development tends to be exhibited.

### <Water-Soluble Organic Solvent>

The aqueous ink composition according to the present embodiment contains a water-soluble organic solvent. As used herein, the water-soluble organic solvent means an organic solvent having a solubility of 0.05 g or more in 100 g of water at 25°C.

The water-soluble organic solvent includes one or more specific solvents having a ClogP value of 0.5 or more and 2.0 or less, preferably two or more such specific solvents, and more preferably three or more such specific solvents. The presence of the specific solvent(s) in the water-soluble organic solvent tends to lead to favorable redispersibility of the aqueous ink composition in a dry state, and the prevention of clogging in the nozzle.

As used herein, the ClogP value means a logP value (1-octanol/water distribution coefficient) calculated computationally. The ClogP value can be calculated using a fragment method, an atomic approach method, or the like. More specifically, the ClogP value may be calculated using the fragment method described in the literature (C. Hansch and A. Leo, "Substituent Constants for Correlation Analysis in Chemistry and Biology" (John Wiley & Sons, New York, 1969)) or a commercially available software package is used. The ClogP values described herein are those calculated using a commercially available software package, Chem Draw Ultra (CambridgeSoft Corporation, USA). It should be noted that in this specification, the ClogP value may be specified up to the first, second, or third decimal place, and the stated least significant digit at the decimal level is obtained by rounding off the digit one further digit lower than the stated least significant digit at the decimal level.

Examples of the specific solvent include diethylene glycol diethyl ether (0.52), 1,2-hexanediol (0.53), diethylene glycol monoisobutyl ether (0.54), propylene glycol monopropyl ether (0.62), diethylene glycol monobutyl ether (0.67), dipropylene glycol monopropyl ether (0.75), 2,2-diethyl-1,3-propanediol (0.82), propylene glycol monobutyl ether (1.15), triethyl citrate (1.17), diethylene glycol monophenyl ether (1.25), 2-ethyl-1,3-hexanediol (1.26), 1,2-octanediol (1.59), diethylene glycol monohexyl ether (1.72), ethylene glycol monohexyl ether (1.90), etc. Incidentally, the numerical values in parentheses represent the ClogP value of each organic solvent. Among these, a specific solvent having a ClogP value of 0.52 or more and 1.9 or less is preferable, and a specific solvent having a ClogP value of 0.53 or more and 1.8 or less is more preferable.

The content of the specific solvent in the aqueous ink composition according to the present embodiment is more than 0% by mass and 5% by mass or less, and may be 0.4% by mass or more and 5% by mass or less, 0.4% by mass or more and 3.5% by mass or less, 0.4% by mass or more and 3% by mass or less, 0.4% by mass or more and 2.5% by mass or less, 0.4% by mass or more and 2% by mass or less, or 0.4% by mass or more and 1.5% by mass or less.

The water-soluble organic solvent may further contain a water-soluble organic solvent having a ClogP value of less than 0.5 or a water-soluble organic solvent having a ClogP value of more than 2.0. Examples of the water-soluble organic solvent having a ClogP value of less than 0.5 include ethyl lactate (0.33), 3-methoxy-1-butanol (0.02), propylene glycol (-1.06), 1,4-butanediol (-1.16), diethylene glycol (-1.30), ethylene glycol (-1.37), triethylene glycol (-1.48), glycerin (-1.54), tetraethylene glycol (-1.66), etc. Examples of the water-soluble organic solvent having a ClogP value of more than 2.0 include 1-heptanol (2.41), dibutyl carbitol (2.63), diethylene glycol mono-2-ethylhexyl ether (2.65), texanol (2.74), etc. Incidentally, the numerical values in parentheses represent the ClogP value of each organic solvent.

The content of the water-soluble organic solvent including the specific solvent(s) in the aqueous ink composition according to the present embodiment is more than 0% by mass and 5% by mass or less, and may be 0.4% by mass or more and 5% by mass or less, 0.4% by mass or more and 3.5% by mass or less, 0.4% by mass or more and 3% by mass or less, 0.4% by mass or more and 2.5% by mass or less, 0.4% by mass or more and 2% by mass or less, or 0.4% by mass or more and 1.5% by mass or less. Such a content tends to reduce the amount of the organic solvent volatilized in the air during the printing.

In the aqueous ink composition according to the present embodiment, the content of the water-soluble organic solvent having a boiling point at 1 atm of 250°C or less is 3% by mass or less, preferably 2.5% by mass or less, and more preferably 2% by mass or less. Such a content tends to further reduce the amount of the organic solvent volatilized in the air during the printing, thereby suppressing harmfulness to the human body and the environment.

### <Humectant>

The aqueous ink composition according to the present embodiment contains a humectant. The humectant is preferably one which is miscible with water and has an effect of preventing the clogging in an ejection nozzle of an inkjet head and/or redissolving the dried aqueous ink composition. A humectant that is solid at room temperature (25°C) may also be used as the humectant. Since solid humectants can hold more water than liquid humectants, the solid humectants are suitable for an aqueous ink composition for inkjet recording. Examples of the solid humectant include ethylene carbonate, urea, ethylene urea, dimethylethylene urea, acetamide, ε-caprolactam, etc. Especially, a water-soluble and solid humectant (hereinafter, also referred to as "water-soluble solid humectant") is preferable. The water-soluble solid humectant is contained for the purpose of preventing the drying of the aqueous ink composition in the ejection nozzle of the inkjet head.

The aqueous ink composition according to the present embodiment contains a sugar alcohol as a water-soluble solid humectant. The sugar alcohol refers to a compound formed by reducing a sugar compound (e.g., aldose and ketose). Sugar alcohols have a large number of hydroxy groups and therefore excellent solubility in water.

The sugar alcohol has a melting point at 1 atm of more than 25°C. Therefore, the sugar alcohol is a solid at room temperature (25°C). The sugar alcohol typically has a melting point of more than 25°C and 270°C or less, preferably 50°C or more and 250°C or less, more preferably 50°C or more and 200°C or less, still more preferably 50°C or more and 170°C or less, and particularly preferably 50°C or more and 150°C or less. The use of the sugar alcohol having a melting point falling within such a range tends to provide an image excellent in fixability, drying property, rubfastness, and transfer resistance.

Examples of the sugar alcohol include threitol (melting point: 88 to 90°C), erythritol (melting point: 121°C), arabitol (melting point: 103°C), ribitol (melting point: 102°C), xylitol (melting point: 92 to 96°C), sorbitol (glucitol) (melting point: 95°C), mannitol (melting point: 164 to 169°C), iditol (melting point: 75 to 79°C), galactitol (melting point: 186 to 191°C), allitol (melting point: 150 to 154°C), maltitol (melting point: 145°C), isomaltitol (melting point: 98 to 103°C), lactitol (melting point: 146°C), pentaerythritol (melting point: 190 to 263°C), etc. Among these, sorbitol (glucitol) is preferable. It should be noted that the sugar alcohol may contain an unreduced sugar compound (e.g., glucose) as an impurity.

The content of the sugar alcohol in the aqueous ink composition according to the present embodiment is typically 4% by mass or more and 10% by mass or less, preferably 4% by mass or more and 9% by mass or less, more preferably 4.5% by mass or more and 8% by mass or less, still more preferably 5% by mass or more and 8% by mass or less, and particularly preferably 6% by mass or more and 7.5% by mass or less. Such a content makes it possible to balance the redispersibility, the drying property, and the transfer resistance.

The above-described specific solvent and sugar alcohol may be used in any ratio. Varying the ratio of the specific solvent and the sugar alcohol may lead to an improvement in the redispersibility, the drying property, and the transfer resistance, as well as an improvement in the color developability. When the content of the specific solvent in the aqueous ink composition according to the present embodiment is represented by A (parts by mass), the content of the sugar alcohol is represented by B (parts by mass), and the ratio thereof is represented by a value obtained by "A/B", the A/B is typically 0.01 or more and 1.25 or less, preferably 0.10 or more and 1.00 or less, more preferably 0.10 or more and 0.90 or less, still more preferably 0.10 or more and 0.80 or less, and particularly preferably 0.10 or more and 0.70 or less.

### <Surfactant>

The aqueous ink composition according to the present embodiment contains a surfactant for the purpose of adjusting the surface tension or the like. Examples of the surfactant include anionic surfactants, cationic surfactants, nonionic surfactants, amphoteric surfactants, silicone surfactants, fluorinated surfactants, etc. Among these, anionic surfactants, nonionic surfactants and silicone surfactants are preferable, and nonionic surfactants and silicone surfactants are more preferable.

Examples of the anionic surfactant include alkyl sulfocarboxylates, α-olefinsulfonates, polyoxyethylene alkyl ether acetates, polyoxyethylene alkyl ether sulfates, N-acyl amino acids or salts thereof, N-acyl-methyltaurine salts, alkyl sulfate polyoxyalkyl ether sulfates, alkyl sulfate polyoxyethylene alkyl ether phosphates, rosin acid soaps, castor oil sulfate ester salts, lauryl alcohol sulfate ester salts, alkylphenol-type phosphate esters, alkyl-type phosphate esters, alkylarylsulfonates, diethyl sulfosuccinates, diethylhexyl sulfosuccinates, dioctyl sulfosuccinates, etc. Examples of commercially available products include HITENOL LA-10, LA-12, LA-16, NEO-HITENOL ECL-30S, ECL-45 (each from DKS Co. Ltd.), and the like.

Examples of the cationic surfactant include 2-vinylpyridine derivatives, poly-4-vinylpyridine derivatives, etc.

Examples of the nonionic surfactant include: ethers such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; esters such as polyoxyethylene oleate ester, polyoxyethylene distearate ester, sorbitan laurate, sorbitan monostearate, sorbitan monooleate, sorbitan sesquioleate, polyoxyethylene monooleate, and polyoxyethylene stearate; acetylene glycols (alcohols) such as 2,4,7,9-tetramethyl-5-decyne-4,7-diol, 3,6-dimethyl-4-octyne-3,6-diol, and 3,5-dimethyl-1-hexyn-3-ol; Surfynol 104, 104PG50, 105PG50, 82, 420, 440, 465 and 485, OLFINE STG (each from Nissin Chemical Industry Co., Ltd.); polyglycol ethers (e.g., TergItol 15-S-7 from SIGMA-ALDRICH, etc.); and the like.

Examples of the amphoteric surfactant include lauryldimethylaminoacetic acid betaine, 2-alkyl-N-carboxymethyl-N-hydroxyethylimidazolinium betaine, palm oil fatty acid amide propyldimethylaminoacetic acid betaine, polyoctylpolyaminoethylglycine, imidazoline derivatives, etc.

Examples of the silicone surfactant include polyether-modified siloxanes, polyether-modified polydimethylsiloxanes, etc. Examples of commercially available products include: BYK-306, BYK-307, BYK-333, BYK-341, BYK-345, BYK-346, BYK-347, BYK-348, BYK-349, BYK-3420, BYK-3450, BYK-3455, BYK-3565, BYK-3760 (each from BYK-Chemie GmbH); KF-351A, KF-352A, KF-353, KF-354L, KF-355A, KF-615A, KF-945, KF-640, KF-642, KF-643, KF-6020, X-22-4515, KF-6011, KF-6012, KF-6015, KF-6017 (each from Shin-Etsu Chemical Co., Ltd.); and the like.

Examples of the fluorinated surfactant include perfluoroalkylsulfonic acid compounds, perfluoroalkylcarboxylic acid compounds, perfluoroalkyl phosphate ester compounds, perfluoroalkylethylene oxide adducts, polyoxyalkylene ether polymer compounds having a perfluoroalkyl ether group in a side chain thereof, etc. Examples of commercially available products include: Zonyl TBS, FSP, FSA, FSN-100, FSN, FSO-100, FSO, FS-300 (each from DuPont); Capstone FS-30, FS-31, FS-3100 (each from Chemours); PF-151N, PF-154N (each from OMNOVA Solutions); F-114, F-410, F-444, EXP.TF-2066, EXP.TF-2148, EXP.TF-2149, F-430, F-477, F-552, F-553, F-554, F-555, F-556, F-557, F-558. F-559, F-561, F-562, R-40, R-41, RS-72-K, RS-75, RS-76-E, RS-76-NS, RS-77, EXP.TF-1540, EXP.TF-1760 (each from DIC Corporation); BYK-340, BYK-3440, BYK-3441 (each from BYK-Chemie GmbH); and the like.

The content of the surfactant in the aqueous ink composition according to the present embodiment is typically 0.1% by mass or more and 5% by mass or less, preferably 0.3% by mass or more and 4% by mass or less, and more preferably 0.5% by mass or more and 3% by mass or less. Such a content tends to improve the permeability of the aqueous ink composition into the substrate and the dispersion stability of the non-white colorant in the aqueous ink composition.

### <Water>

The aqueous ink composition according to the present embodiment contains water. The water is preferably water containing a low amount of impurities such as metal ions, that is, ion-exchanged water, distilled water, or the like.

The content of water in the aqueous ink composition according to the present embodiment is typically 50% by mass or more and 90% by mass or less, preferably 60% by mass or more and 90% by mass or less, and more preferably 70% by mass or more and 90% by mass or less.

### <Ink Preparation Agent>

The aqueous ink composition according to the present embodiment may further contain an ink preparation agent, in addition to the components described above. Examples of the ink preparation agent include a viscosity modifier, an antifoaming agent, a fungicide, a preservative, a pH adjuster, a chelating reagent, a corrosion inhibitor, a water-soluble UV absorber, a water-soluble polymer compound, a dispersing agent, a resin emulsion, a wax agent, an antioxidant, and the like.

### [Viscosity Modifier]

Industrial inkjet printers usually have the predetermined range of the viscosity of ejectable inks based on specifications of a printer head mounted thereon. Thus, it may be important to add a viscosity modifier to an ink composition to adjust its viscosity to an appropriate range.

The viscosity modifier may be any substance which can adjust the viscosity of the aqueous ink composition, and known substances which function as such may be used. Specific examples of the viscosity modifier include water-soluble polymer compounds as described later, etc.

### [Antifoaming Agent]

Examples of the antifoaming agent include compounds such as silicone compounds, silica mineral oil compounds, olefin compounds, and acetylene compounds. Examples of commercially available products include Surfynol DF37, DF58, DF110D, DF220, MD-20, OLFINE SK-14 (each from Nissin Chemical Industry Co., Ltd.); BYK-1719, BYK-1724, BYK-1770 (each from BYK-Chemie GmbH); etc.

### [Fungicide]

Examples of the fungicide include sodium dehydroacetate, sodium benzoate, sodium pyridinethione-1-oxide, p-hydroxybenzoic acid ethyl ester, 1,2-benzoisothiazolin-3-one and salts thereof, etc.

### [Preservative]

Examples of the preservative include organosulfur compounds, organic nitrogen-sulfur compounds, organic halogen compounds, haloaryl sulfone compounds, iodopropargyl compounds, haloalkylthio compounds, nitrile compounds, pyridine compounds, 8-oxyquinoline compounds, benzothiazole compounds, isothiazoline compounds, dithiol compounds, pyridine oxide compounds, nitropropane compounds, organic tin compounds, phenol compounds, quaternary ammonium salt compounds, triazine compounds, thiazine compounds, anilide compounds, adamantane compounds, dithiocarbamate compounds, brominated indanone compounds, benzyl bromoacetate compounds, and inorganic salt compounds. Specific examples of the organic halogen compound include sodium pentachlorophenol, etc. Specific examples of the pyridine oxide compound include sodium 2-pyridinethiol-1-oxide, etc. Specific examples of the isothiazoline compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, etc. Specific examples of other preservative fungicides include anhydrous sodium acetate, sodium sorbate, sodium benzoate; Proxel GXL(S), Proxel XL-2(S) (each from Arch Chemicals, Inc.), etc.

### [pH Adjuster]

Examples of the pH adjuster include: alkanolamines such as diethanolamine, triethanolamine, N-methyldiethanolamine, and 2-amino-2-methyl-1-propanol; hydroxides of alkali metals such as lithium hydroxide, sodium hydroxide, and potassium hydroxide; ammonium hydroxide (aqueous ammonia); carbonates of alkali metals such as lithium carbonate, sodium carbonate, sodium hydrogencarbonate, and potassium carbonate; alkali metal salts of organic acids such as sodium silicate and potassium acetate; inorganic bases such as disodium phosphate; etc. It should be noted that the pH adjuster is not considered as the water-soluble organic solvent described above.

### [Chelating Reagent]

Examples of the chelating reagent include disodium ethylenediaminetetraacetate, sodium nitrilotriacetate, sodium hydroxyethylethylenediaminetriacetate, sodium diethylenetriaminepentaacetate, sodium uracil diacetate, etc.

### [Corrosion Inhibitor]

Examples of the corrosion inhibitor include acid sulfite, sodium thiosulfate, ammonium thioglycolate, diisopropylammonium nitrite, pentaerythritol tetranitrate, dicyclohexylammonium nitrite, etc.

### [Water-Soluble UV Absorber]

Examples of the water-soluble UV absorber include sulfonated benzophenone compounds, benzotriazole compounds, salicylic acid compounds, cinnamic acid compounds, triazine compounds, etc.

### [Water-Soluble Polymer Compound]

Examples of the water-soluble polymer compound include polyethylene glycol, polyvinyl alcohol, cellulose derivatives, polysaccharides, polyamine, polyimine, neutralized aqueous solutions of styrene-acrylic copolymers, etc.

### [Dispersing Agent]

Examples of the dispersing agent include copolymers composed of at least two types of monomers (preferably, at least one of them being a hydrophilic monomer) selected from monomers such as: styrene and derivatives thereof; vinylnaphthalene and derivatives thereof; aliphatic alcohol esters of α,β-ethylenically unsaturated carboxylic acids; (meth)acrylic acid and derivatives thereof; maleic acid and derivatives thereof; itaconic acid and derivatives thereof; fumaric acid and derivatives thereof; vinyl acetate, vinyl alcohol, vinylpyrrolidone, acrylamide, and derivatives thereof; etc. Examples of the hydrophilic monomer include monomers that leave a carboxy group after the polymerization thereof, such as (meth)acrylic acid.

Examples of such copolymers include styrene-(meth)acrylic acid copolymers, styrene-(meth)acrylic acid-(meth)acrylate ester copolymers, (meth)acrylate ester-(meth)acrylic acid copolymers, polyethylene glycol (meth)acrylate-(meth)acrylic acid copolymers, styrene-maleic acid copolymers, etc. Among these, styrene-(meth)acrylic acid copolymers, styrene-(meth)acrylic acid-(meth)acrylate ester copolymers, (meth)acrylate ester-(meth)acrylic acid copolymers, and polyethylene glycol (meth)acrylate-(meth)acrylic acid copolymers are preferred, and styrene-(meth)acrylic acid copolymers, styrene-(meth)acrylic acid-(meth)acrylate ester copolymers, and (meth)acrylate ester-(meth)acrylic acid copolymers are more preferred, (meth)acrylate ester-(meth)acrylic acid copolymer is still more preferred, and methacrylate ester-methacrylic acid copolymers are particularly preferred. The types of the copolymer include a block copolymer, a random copolymer, a graft copolymer, etc., and a block copolymer is preferred. These copolymers may be in the form of a salt.

The dispersing agent may be synthesized or may be available as a commercial product.

Examples of the dispersing agent available as a commercial product include: Joncryl 62, 67, 68, 678, and 687 (styrene-acrylic copolymer from BASF); Mowinyl S-100A (modified vinyl acetate copolymer from Japan Coating Resin Co., Ltd.); JURYMER AT-210 (polyacrylate ester copolymer from Nihon Junyaku Co., Ltd.); and the like.

Examples of the synthetically obtained dispersing agent include an A-B block polymer disclosed in PCT International Publication No. WO 2013/115071. The monomer(s) constituting the A block of the A-B block polymer disclosed in PCT International Publication No. WO 2013/115071 is at least one monomer selected from (meth)acrylic acid, or linear or branched C4-alkyl (meth)acrylate, preferably at least one monomer selected from methacrylic acid or n-butyl methacrylate, and more preferably a combination of these two monomers. In addition, the monomer(s) constituting the B block of the A-B block polymer disclosed in PCT International Publication No. WO 2013/115071 is at least one monomer selected from benzyl methacrylate or benzyl acrylate, and preferably benzyl methacrylate. Specific examples of the A-B block polymer include block copolymers disclosed in Synthesis Examples 3 to 8 of PCT International Publication No. WO 2013/115071.

### [Resin Emulsion]

The resin emulsion is not limited as long as it is different from the dispersing agent described above, and examples thereof include a urethane resin, a polyester resin, an acrylic resin, a vinyl acetate resin, a vinyl chloride resin, an acryl-styrene resin, an acryl-silicone resin, etc. Examples of commercially available products include: SUPERFLEX 126, 150, 170, 210, 420, 470, 820, 830, 860, 890 (each being a urethane resin emulsion from DKS Co. Ltd.); HYDRAN HW-350, HW-178, HW-163, HW-171, AP-20, AP-30, AP-40F, WLS-201, and WLS-210 (each being a urethane resin emulsion from DIC Corporation); 0569, 0850Z, 2108 (each being a styrene-butadiene resin emulsion from JSR Corporation); AE980, AE981A, AE982, AE986B, AE104 (each being an acrylic resin emulsion from Emulsion Technology Co., Ltd.); Saivinol SK-200 (acrylic resin emulsion from Saiden Chemical Industry Co., Ltd.); VONCOAT 4001, and 5454 (each being an acrylic resin emulsion from DIC Corporation); and the like.

When the aqueous ink composition according to the present embodiment contains a resin emulsion, the content of the solid matter thereof is typically 0.1% by mass or more and 10% by mass or less, preferably 0.3% by mass or more and 9% by mass or less, more preferably 0.5% by mass or more and 8% by mass or less, still more preferably 1% by mass or more and 8% by mass or less, and particularly preferably 1.5% by mass or more and 8% by mass or less.

### [Wax Agent]

The wax agent is preferably a wax emulsion, and more preferably an aqueous wax emulsion. Natural waxes and synthetic waxes may be used as the wax agent. Examples of the natural waxes include: petroleum waxes such as paraffin waxes and microcrystalline waxes; lignite waxes such as montan wax; plant waxes such as carnauba waxes and candelilla waxes; animal and plant waxes such as beeswaxes and lanolins; and the like. Examples of the synthetic waxes include polyalkylene waxes (preferably, poly-C2-C4-alkylene waxes), oxidized polyalkylene waxes (preferably, oxidized poly-C2-C4-alkylene waxes), paraffin waxes, etc. Of these synthetic waxes, at least one wax selected from a polyethylene wax, a polypropylene wax, an oxidized polyethylene wax, an oxidized polypropylene wax, and paraffin waxes is preferred, and an oxidized polyethylene wax is more preferred. In addition, the average particle diameter of the wax is preferably 50 nm or more and 5 µm or less, and more preferably 100 nm or more and 1 µm or less in order to prevent clogging of an inkjet head.

Examples of commercial products of the wax emulsion include AQUACER 515 (acid value: 5 mgKOH/g) from BYK Japan KK and HYTEC E-6500 (acid value: 10 to 20 mgKOH/g) from Toho Chemical Industry Co., Ltd, etc.

When the aqueous ink composition according to the present embodiment contains a wax agent, the content of the solid matter thereof is typically 0.1% by mass or more and 5% by mass or less, preferably 0.2% by mass or more and 3% by mass or less, more preferably 0.5% by mass or more and 3% by mass or less, still more preferably 0.5% by mass or more and 2% by mass or less, and particularly preferably 0.5% by mass or more and 1.5% by mass or less.

### [Antioxidant]

Various organic and metal-complex-based anti-fading agents, for example, may be used as the antioxidant. Examples of the organic anti-fading agent include hydroquinones, alkoxyphenols, dialkoxyphenols, phenols, anilines, amines, indanes, chromanes, alkoxyanilines, heterocycles, etc.

### <Preparation Method of Aqueous Ink Composition >

The preparation method of the aqueous ink composition according to the present embodiment is not limited, and any known preparation method may be employed. Examples of the preparation method include a method which involves preparing an aqueous dispersion containing a non-white colorant and a dispersing agent, and adding to and mixing with the aqueous dispersion, water, a water-soluble organic solvent, a sugar alcohol, a surfactant, and an optional ink preparation agent.

When the aqueous ink composition according to the present embodiment is intended for use in inkjet recording, the aqueous ink composition is preferably filtered to remove aggregates and the like. Any known filtration method may be appropriately employed for the filtration. An exemplary method involves performing suction filtration using filter paper such as glass filter paper GC-50 (retention particle diameter: 0.5 µm, from Advantec Toyo Kaisha, Ltd.), glass filter paper GA-100 (retention particle diameter: 1.0 µm, from Advantec Toyo Kaisha, Ltd.), or the like.

The aqueous ink composition according to the present embodiment has a viscosity at 25°C of typically 2.0 mPa·s or more and 10 mPa·s or less, preferably 3.0 mPa·s or more and 8.0 mPa·s or less, more preferably 3.5 mPa·s or more and 7.5 mPa·s or less, and still more preferably 4.0 mPa·s or more and 7.5 mPa·s or less. The viscosity of the aqueous ink composition can be measured using a commercially available E-type viscometer. Examples of the commercially available E-type viscometer include a TR-100E type viscometer, a TV-100E type viscometer, a TP-200E type viscometer, an RE-215 type viscometer (each from Toki Sangyo Co., Ltd), etc.

The aqueous ink composition according to the present embodiment exhibits excellent redispersibility and storage stability. The image recorded with the aqueous ink composition according to the present embodiment exhibits excellent color developability and chroma regardless of whether it is an image formed on an ink layer of an aqueous white ink composition, and additionally is excellent in various kinds of fastness properties such as rubfastness, rubfastness at elevated temperatures, transfer resistance, water-fastness, light-fastness, heat resistance, and oxidizing gas resistance (for example, ozone gas resistance). In addition, the aqueous ink composition according to the present embodiment exhibits excellent drying property in the image formation as well as little coating unevenness and bleeding, leading to a large dot diameter, and thus is also excellent in image formability.

### <<Ink Set>>

The ink set according to the present embodiment includes the aqueous ink composition according to the present embodiment described above and an aqueous white ink composition containing a white colorant and water.

### <Aqueous White Ink Composition>

The aqueous white ink composition contains a white colorant and water. Hereinafter, each component contained in the aqueous white ink composition will be described in detail. It should be noted that each of the following components may be used alone or in combination of two or more types thereof.

### [White Colorant]

The aqueous white ink composition contains a white colorant. The white colorant is not limited as long as human eyes can visually recognize it as white, and examples thereof include: white inorganic pigments such as titanium oxide, zinc oxide, zinc sulfide, antimony oxide, and zirconium oxide; white organic pigments such as white hollow resin particles and polymer particles; and the like. Specific examples of the white colorant include C.I. Pigment White 1 (basic lead carbonate), C.I. Pigment White 4 (zinc oxide), C.I. Pigment White 5 (a mixture of zinc sulfide and barium sulfate), C.I. Pigment White 6 (titanium oxide), C.I. Pigment White 6:1 (titanium oxide containing another metal oxide), C.I. Pigment White 7 (zinc sulfide), C.I. Pigment White 18 (calcium carbonate), C.I. Pigment White 19 (clay), C.I. Pigment White 20 (titanated mica), C.I. Pigment White 21 (barium sulfate), C.I. Pigment White 22 (natural barium sulfate), C.I. Pigment White 23 (gloss white), C.I. Pigment White 24 (alumina white), pigment White 25 (gypsum), C.I. Pigment White 26 (magnesium oxide/silicon oxide), C.I. Pigment White 27 (silica), C.I. Pigment White 28 (anhydrous calcium silicate), and the like.

The titanium oxide may be surface-treated with silica or alumina. The titanium oxide surface-treated in such a manner is preferable from the viewpoint of excellent color developability and hiding property. A preferable crystal form of the titanium oxide is a rutile form.

Examples of commercially available products of the titanium oxide include: Tipaque R-580, R-670, R-780, R-850, R-855 and CR-60 (each from Ishihara Sangyo Kaisha, Ltd.); JR-301, JR-403, JR-405, JR-804, JR-806, JR-600A, JR-800 (each from Tayca Corporation Co. Ltd.); and the like.

A white colorant prepared in the form of a dispersion (slurry) with the white colorant dispersed therein can also be preferably used. Examples of commercially available products of the dispersion (slurry) include TF-5760 WHITE (D2B) (titanium oxide slurry from Dainichiseika Color & Chemicals Mfg. Co., Ltd.; titanium oxide solid concentration: 60%, average particle diameter: 300 nm), etc.

A white colorant in a solid state may be used after being dispersed using a dispersing agent to form a dispersion.

Known white hollow resin particles described in, for example, U.S. Pat. No. 4880465, Japanese Patent No. 3562754, Japanese Patent No. 6026234, Japanese Patent No. 5459460, Japanese Unexamined Patent Application, Publication No. 2003-268694, Japanese Patent No. 4902216, etc. can be used as the white hollow resin particles.

It should be noted that the aqueous white ink composition may further contain other colorants for the purpose of the adjustment of whiteness and lightness, as long as the effects of the present invention are not impaired.

The content of the white colorant in the aqueous white ink composition is typically 1% by mass or more and 30% by mass or less, preferably 1% by mass or more and 20% by mass or less, more preferably 2% by mass or more and 15% by mass or less, and particularly preferably 5% by mass or more and 15% by mass or less.

### [Water]

The aqueous white ink composition contains water. The water is preferably water containing a low amount of impurities such as metal ions, that is, ion-exchanged water, distilled water, or the like.

The content of water in the aqueous white ink composition is typically 10% by mass or more and 90% by mass or less, preferably 20% by mass or more and 80% by mass or less, more preferably 30% by mass or more and 80% by mass or less, and particularly preferably 40% by mass or more and 80% by mass or less.

### [Other Components]

The aqueous white ink composition may further contain a water-soluble organic solvent, a surfactant, and an ink preparation agent in addition to the aforementioned components. Examples of the water-soluble organic solvent, the surfactant, and the ink preparation agent include those exemplified in relation to the aqueous ink composition according to the embodiment described above.

### [Preparation Method of Aqueous White Ink Composition]

The preparation method of the aqueous white ink composition is not limited, and any known preparation method may be employed. Examples of the preparation method include a method which involves preparing an aqueous dispersion containing a white colorant, and adding to and mixing with the aqueous dispersion, water and an optional ink preparation agent.

The aqueous white ink composition is preferably subjected to precision filtration through glass filter paper or the like as is the case with the aqueous ink composition according to the present embodiment described above.

The aqueous white ink composition has a viscosity at 25°C of typically 2.0 mPa·s or more and 10 mPa·s or less, preferably 3.0 mPa·s or more and 8.0 mPa·s or less, more preferably 3.5 mPa·s or more and 7.5 mPa·s or less, and still more preferably 4.0 mPa·s or more and 7.5 mPa·s or less.

### <<Production Method of Inkjet-Printed Matter>>

The production method of the inkjet-printed matter according to the present embodiment includes ejecting droplets of the aqueous ink composition according to the present embodiment described above from an inkjet head and attaching the droplets to a printing medium to obtain a printed matter.

The printing medium refers to a medium to which the ink composition according to the present embodiment can attach, and can be roughly divided into an ink-absorbent printing medium and a less ink-absorbent printing medium.

Examples of the ink-absorbent printing medium include inkjet paper, inkjet film, glossy paper, cardboard, and liner paper contained in cardboard and the like. Specific examples of the liner paper include K liner, C liner, and lightweight liner, etc. commercially available from Oji Materia Co., Ltd., Nippon Paper Industries Co., Ltd., Daio Paper Corporation, and the like.

Examples of the less ink-absorbent printing medium include: various types of paper such as coated paper, lightweight coated paper, slightly coated paper, coated cardboard, and art paper, which are used for gravure printing, offset printing, and the like; cast coated paper, which is used for label printing; and the like. These printing media are prepared by applying a coating agent to surface-untreated woodfree paper or the like for imparting whiteness or the like, and thus have a coating layer; specific examples thereof include: OK TOPKOTE +, MIRRORKOTE Platina (each from Oji Paper Co., Ltd.); AURORA COAT (from Nippon Paper Industries Co., Ltd.); Pearl Coat (from Mitsubishi Paper Mills Limited); Maricoat (from Hokuetsu Corporation); RAICHO COAT (from Chuetsu Pulp & Paper Co., Ltd.); and the like.

The aqueous ink composition according to the present embodiment can be applied to any printing medium; the aqueous ink composition can be suitably used for liner paper and less ink-absorbent printing media, and particularly suitably for cardboard, liner paper, and coated cardboard.

When less ink-absorbent printing medium is used, the printing medium is also preferably subjected to a surface modification treatment for the purpose of, for example, improving the fixability of the colorant.

For the surface modification treatment, at least one treatment selected from the group consisting of corona discharge treatment, plasma treatment, and flame treatment is preferably performed. The surface modification of the printing medium may be performed while appropriately adjusting the number of times of the treatment, the time period of the treatment, the voltage to be applied, and the like so as to achieve a desired effect. The degree of the surface modification can be checked by, for example, measurement of contact angle via any known method. The effect of the surface modification treatment is generally known to be attenuated over time. Accordingly, the printing medium on which the surface modification treatment is performed is preferably subjected to inkjet recording promptly.

An ink nozzle or the like of the inkjet printer used in the production method of an inkjet-printed matter according to the present embodiment is not limited, and may be appropriately selected depending on the purposes.

Any known printing technique of inkjet printers may be employed for the printing method described herein. Examples of the printing technique include: a charge controlling technique, which involves ejecting an ink using an electrostatic attractive force; a drop-on-demand technique (pressure pulse technique), which utilizes a vibration pressure of a piezo element; an acoustic inkjet technique, which involves converting an electric signal into an acoustic beam and applying the acoustic beam to an ink, and ejecting the ink using the radiation pressure thereof; a thermal inkjet technique, which involves heating an ink to form air bubbles and utilizing the pressure generated thereupon; and the like. The printing techniques also include a technique that involves improving the fixability of a colorant using a clear and colorless ink composition, etc. In industrial inkjet printers, single-pass printing using a line head inkjet printer is also preferably performed for the purpose of increasing a printing speed. The aqueous ink composition according to the present embodiment can give rise to a favorable printed matter even under the printing conditions described above.

Either an inkjet head having an ink circulation mechanism or an inkjet head having no ink circulation mechanism can be used. The inkjet head having an ink circulation mechanism is preferably used from the viewpoint of preventing the drying of the ink composition in the vicinity of the nozzles.

### [Production of Cardboard Sheet]

The production method of an inkjet-printed matter according to the present embodiment may be suitably employed in the production of a cardboard sheet by a preprinting procedure.

In the production of the cardboard sheet, the following steps are sequentially performed: a printing step of ejecting droplets of the aqueous ink composition according to the present embodiment described above from an inkjet head in a single-pass manner and attaching the droplets to liner paper or coated cardboard to obtain a printed matter; and a gluing step of gluing the resulting printed matter and a corrugating medium together to obtain a cardboard sheet.

### (Printing Step)

In the printing step, droplets of the aqueous ink composition according to the present embodiment are ejected from an inkjet head in a single-pass manner and attached to liner paper or coated cardboard to obtain a printed matter.

The nozzle and the like of the inkjet printer is not limited, and may be appropriately selected depending on the purposes. Any known printing technique of the inkjet printer may be employed.

In the printing step, droplets of an aqueous white ink composition containing a white colorant and water may be attached to liner paper or coated cardboard, followed by attaching the droplets of the aqueous ink composition according to the present embodiment to the liner paper or the coated cardboard to obtain a printed matter, for enhanced decorative purposes. The aqueous ink composition according to the present embodiment exhibits favorable color developability even when it is attached to the ink layer of the aqueous white ink composition as described above.

### (Gluing Step)

In the gluing step, the printed matter obtained in the printing step and a corrugating medium are glued together to obtain a cardboard sheet.

In the gluing step, a corrugator-treatment may be employed in which an adhesive layer is formed on the surface of the corrugating medium via the application of an adhesive substance, and then the printed matter and the corrugating medium are superposed on each other and bonded via the application of pressure and heat. Corrugating media used in common cardboard sheets may be used as the corrugating medium of the present disclosure without particular limitation. The adhesive substance is exemplified by: starch glues; synthetic resins such as polyethylenes, polypropylenes, polyamides, polyester, ethylene-unsaturated carboxylic acid copolymers, styrene-butadiene copolymers, butadiene-acrylonitrile copolymers, styrene-butadiene-acrylonitrile copolymers, polyvinyl acetates, ethylene-vinyl acetate copolymers, polyacrylate ester copolymers, and styrene-acrylate ester copolymers; and the like.

A single process of the corrugator-treatment can produce a single-faced cardboard sheet, and multiple repetition of the corrugator-treatment can produce a double-faced cardboard sheet or a cardboard sheet with a plurality of walls. The double-faced cardboard sheet can be produced, for example, by using a corrugator having a single facer (SF) and a double facer (DF): the single facer (SF) glues liner paper and a corrugating medium with a heating/pressing roll to form a single-faced cardboard sheet, and the double facer (DF) stacks further liner paper on the corrugating medium side of the single-faced cardboard sheet obtained by the single facer, and move the stack on a hot plate under pressure to glue the further liner paper and the single-faced cardboard sheet together. The heating/pressing conditions are not limited, and by way of an example, it is preferable to set, for the single facer, the heating temperature to 150 to 200°C, the linear pressure to 20 to 40 kN/m, and the pressing time to 0.01 to 0.20 seconds, and to set, for the double facer, the heating temperature to 150 to 200°C, the linear pressure to 0.1 to 1.0 kN/m, and the pressing time to 2 to 7 seconds.

The cardboard sheet obtained as described above is subjected to making a cut thereon, followed by forming, whereby a cardboard box can be obtained.

With respect to all the matters described above, combinations of preferred features are more preferred, and combinations of more preferred features are still more preferred. The same applies to combinations of a preferred feature and a more preferred feature, combinations of a more preferred feature and still more preferred feature, and the like.

### EXAMPLES

Hereinafter, the present invention will be described in more detail with reference to Examples, but the present invention is not limited by Examples.

In Examples, "parts" means parts by mass, and "%" means % by mass, unless otherwise specified. In the quantification of the pigment solid content in a dispersion, if required, the pigment solid content was calculated as a value converted to the pigment solid content only according to a dry weight method using MS-70 from A&D Company, Limited.

### <Preparation Example 1: Preparation of Black Dispersion>

A block copolymer (dispersing agent) was obtained by following Synthesis Example 3 of PCT International Publication No. WO 2013/115071. The obtained block copolymer (6 parts) was dissolved in methyl ethyl ketone (20 parts) to obtain a uniform solution. To this solution was added a mixed solution prepared by dissolving sodium hydroxide (0.45 parts) in water (53.55 parts), and then carbon black (Nerox 605, from Orion Engineered Carbons) (20 parts) was added thereto, followed by dispersion treatment in a sand grinder at 1500 rpm for 15 hours to obtain a solution. Water (100 parts) was added to the obtained solution and the mixture was filtered through a glass filter paper GA-100 to remove aggregates and the like, whereby a filtrate was obtained. Methyl ethyl ketone and a part of water in the filtrate were distilled under reduced pressure using an evaporator to obtain black dispersion (Kdp) having a pigment solid content of 12.0%.

### <Preparation Example 2: Preparation of Cyan Dispersion>

A cyan dispersion (Cdp) having a pigment solid content of 12.5% was obtained in the same manner as in Preparation Example 1 except that C.I. Pigment Blue 15:4 (Chromofine blue 4851, from Dainichiseika Color & Chemicals Mfg. Co., Ltd.) was used instead of the carbon black used in Preparation Example 1.

### <Preparation Example 3: Preparation of Magenta Dispersion>

A magenta dispersion (Mdp) having a pigment solid content of 12.1% was obtained in the same manner as in Preparation Example 1 except that C.I. Pigment Red 122 (Inkjet Magenta E02VP2621 from Clariant AG) was used instead of the carbon black used in Preparation Example 1.

### <Preparation Example 4: Preparation of Yellow Dispersion>

A yellow dispersion (Ydp) having a pigment solid content of 11.8% was obtained in the same manner as in Preparation Example 1 except that C.I. Pigment Yellow 155 (Ink Jet Yellow 4G VP2532, from Clariant AG) was used instead of the carbon black used in Preparation Example 1.

### <Preparation Example 5: Preparation of Resin Emulsion>

A resin emulsion having an acid value of 6 mgKOH/g and a solid content of 25% was prepared by following Preparation Example 4 of PCT International Publication No. WO 2015/147192. This resin emulsion is referred to as "resin 1".

### <Examples 1 to 25 and Comparative Examples 1 to 9: Preparation of Aqueous Ink Compositions>

The components shown in Tables 1 to 3 below were mixed and then filtered through a membrane filter having a pore diameter of 3 µm to obtain aqueous ink compositions for evaluation tests.

### <Reference Example 1: Preparation of Aqueous White Ink Composition>

The components shown in Table 4 below were mixed and then filtered through a membrane filter having a pore diameter of 3 µm to obtain an aqueous white ink composition for evaluation test.

The numerical values in the cells of each component in Tables 1 to 4 below indicate the amount (parts) of the component added, and blank cells indicate no addition of the component. In addition, abbreviations in Tables 1 to 4 below represent the following components.
Kdp: the black dispersion obtained in Preparation Example 1
Cdp: the black dispersion obtained in Preparation Example 2
Mdp: the black dispersion obtained in Preparation Example 3
Ydp: the black dispersion obtained in Preparation Example 4
TF-5760 WHITE(D2B): white dispersion (from Dainichiseika Color & Chemicals Mfg. Co., Ltd., solid content: 60%, titanium oxide dispersion)
DEGHe: diethylene glycol monohexyl ether (ClogP: 1.72, boiling point: 259.1°C)
EGHe: ethylene glycol monohexyl ether (ClogP: 1.90, boiling point: 208°C)
DEGPh: diethylene glycol monophenyl ether (ClogP: 1.25, boiling point: 283°C)
PnB: propylene glycol monobutylether (ClogP: 1.15, boiling point: 171°C)
1,2HD: 1,2-hexanediol (ClogP: 0.53, boiling point: 223°C)
EHDG: diethylene glycol mono-2-ethylhexyl ether (ClogP: 2.65, boiling point: 272°C)
PG: propylene glycol (ClogP: -1.06, boiling point: 188°C)
TEG: triethylene glycol (ClogP: -1.48, boiling point: 276°C)
GL: glycerin (ClogP: -1.54, boiling point: 290°C)
Glycereth-26: polyoxyethylene glycerin (average number of moles of added ethylene oxide: 26)
AMP: 2-amino-2-methyl-1-propanol
TEA: triethanolamine
BYK-3420: BYK-3420 (from BYK-Chemie GmbH)
SF440: Surfynol 440 (from Nissin Chemical Industry Co., Ltd.)
SF465: Surfynol 465 (from Nissin Chemical Industry Co., Ltd.)
resin 1: the resin emulsion obtained in Preparation Example 5
water: ion-exchanged water

**[Table 1]**

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Black dispersion | Kdp | 41.7 | 41.7 | 41.7 | 41.7 | 41.7 | 41.7 | 41.7 | 41.7 | 41.7 | 41.7 | 41.7 | 41.7 | 41.7 |
| Cyan dispersion | Cdp | | | | | | | | | | | | | |
| Magenta dispersion | Mdp | | | | | | | | | | | | | |
| Yellow dispersion | Ydp | | | | | | | | | | | | | |
| Water-soluble organic solvent | DEGHe | 0.30 | 0.30 | 0.30 | 0.30 | 0.30 | 0.30 | 0.30 | 0.30 | | 0.30 | 0.30 | 0.30 | 0.30 |
| | EGHe | | | | | | | | | 0.30 | | | | |
| | DEGPh | 0.10 | 0.10 | 0.10 | 0.10 | 0.10 | 0.10 | 0.10 | 0.10 | 0.10 | 0.10 | 0.10 | 0.10 | 0.10 |
| | PnB | 1.00 | 2.00 | 3.00 | 2.00 | 2.00 | 1.50 | 3.00 | | 2.00 | 1.00 | 1.00 | | |
| | 1,2-HD | | | | | | | | 2.00 | | | | | |
| | EHDG | | | | | | | | | | | | | |
| | PG | | | | 0.50 | 1.00 | 1.50 | | | | | | | |
| | TEG | | | | | | | 1.60 | | | | | 4.60 | |
| pH adjuster | AMP | 0.50 | 0.50 | 0.50 | 0.50 | 0.50 | 0.50 | 0.50 | 0.50 | 0.50 | 0.50 | 0.50 | 0.50 | 0.50 |
| Surfactant | BYK3420 | | | | | | | | | | | | | |
| | SF440 | 0.50 | 0.50 | 0.50 | 0.50 | 0.50 | 0.50 | 0.50 | 0.50 | 0.50 | 0.50 | 0.50 | 0.50 | 0.50 |
| | SF465 | | | | | | | | | | | | | |
| Sugar alcohol | Sorbitol | 7.50 | 7.50 | 7.50 | 6.00 | 6.00 | 6.00 | 6.00 | 6.00 | 6.00 | 10.00 | 4.00 | 7.50 | 10.00 |
| | Penta erythritol | | | | | | | | | | | | | |
| | Xylitol | | | | | | | | | | | | | |
| Resin 1 | | 20.0 | 20.0 | 20.0 | 20.0 | 20.0 | 20.0 | 20.0 | 20.0 | 20.0 | 20.0 | 20.0 | 20.0 | 20.0 |
| Water | | q.s. | | | | | | | | | | | | |
| Total | | 100.0 | 100.0 | 100.0 | 100.0 | 100.0 | 100.0 | 100.0 | 100.0 | 100.0 | 100.0 | 100.0 | 100.0 | 100.0 |
| Total amount of solvent(s) (%) | | 1.4 | 2.4 | 3.4 | 2.9 | 3.4 | 3.4 | 5.0 | 2.4 | 2.4 | 1.4 | 1.4 | 5.0 | 0.4 |
| Amount of solvent having boiling point of 250°C or less (%) | | 1.0 | 2.0 | 3.0 | 2.5 | 3.0 | 3.0 | 3.0 | 2.0 | 2.3 | 1.0 | 1.0 | 0.0 | 0.0 |

**[Table 2]**

| | | Examples | | | | | | | | | | | |
|---|---|---|---|---|---|---|---|---|---|---|---|---|---|
| | | 14 | 15 | 16 | 17 | 18 | 19 | 20 | 21 | 22 | 23 | 24 | 25 |
| Black dispersion | Kdp | 41.7 | 41.7 | 41.7 | 41.7 | 41.7 | 41.7 | 41.7 | 41.7 | 41.7 | | | |
| Cyan dispersion | Cdp | | | | | | | | | | 32.0 | | |
| Magenta dispersion | Mdp | | | | | | | | | | | 41.3 | |
| Yellow dispersion | Ydp | | | | | | | | | | | | 42.4 |
| Water-soluble organic solvent | DEGHe | | | | | | 0.30 | 1.00 | | 0.30 | 0.30 | 0.30 | 0.30 |
| | EGHe | 0.30 | 0.30 | | | | | | | | | | |
| | DEGPh | 0.10 | 0.10 | | | | 0.10 | 1.00 | | 0.10 | 0.10 | 0.10 | 0.10 |
| | PnB | 2.00 | 2.00 | | | | | | | | | | |
| | 1,2-HD | | | 1.50 | 2.00 | 3.00 | 2.00 | 3.00 | 2.00 | 2.00 | | | |
| | EHDG | | | | | | | | 0.50 | | | | |
| | PG | | | | | | | | 1.00 | | | | |
| | TEG | | | | | | | | | | 4.60 | 4.60 | 4.60 |
| pH adjuster | AMP | 0.50 | 0.50 | 0.50 | 0.50 | 0.50 | 0.50 | 0.50 | 0.50 | 0.50 | 0.50 | 0.50 | 0.50 |
| Surfactant | BYK3420 | | 0.50 | | | | | | | | | | |
| | SF440 | 0.50 | | 0.50 | 0.50 | 0.50 | 0.50 | 0.50 | 0.50 | 0.50 | 0.50 | 0.50 | 0.50 |
| | SF465 | 2.50 | | | | | | | | | | | |
| Sugar alcohol | Sorbitol | 6.00 | 6.00 | 6.00 | 6.00 | 6.00 | | 6.00 | 6.00 | 5.00 | 7.50 | 7.50 | 7.50 |
| | Penta erythritol | | | | | | | | | 1.00 | | | |
| | Xylitol | | | | | | 6.00 | | | | | | |
| Resin 1 | | 20.0 | 20.0 | 20.0 | 20.0 | 20.0 | 20.0 | 20.0 | 20.0 | 20.0 | 20.0 | 20.0 | 20.0 |
| Water | | q.s. | | | | | | | | | | | |
| Total | | 100.0 | 100.0 | 100.0 | 100.0 | 100.0 | 100.0 | 100.0 | 100.0 | 100.0 | 100.0 | 100.0 | 100.0 |
| Total amount of solvent(s) (%) | | 2.4 | 2.4 | 1.5 | 2.0 | 3.0 | 2.4 | 5.0 | 3.5 | 2.4 | 5.0 | 5.0 | 5.0 |
| Amount of solvent having boiling point of 250°C or less (%) | | 2.3 | 2.3 | 1.5 | 2.0 | 3.0 | 2.0 | 3.0 | 3.0 | 2.0 | 0.0 | 0.0 | 0.0 |

**[Table 3]**

| | | Comparative Examples | | | | | | | | |
|---|---|---|---|---|---|---|---|---|---|---|
| | | 1 | 2 | 3 | 4 | 5 | 6 | 7 | 8 | 9 |
| Black dispersion | Kdp | 41.7 | 41.7 | 41.7 | 41.7 | 41.7 | 41.7 | | | |
| Cyan dispersion | Cdp | | | | | | | 32.0 | | |
| Magenta dispersion | Mdp | | | | | | | | 41.3 | |
| Yellow dispersion | Ydp | | | | | | | | | 42.4 |
| Water-soluble organic solvent | DEGHe | 0.30 | 0.30 | 0.30 | | | | | | |
| | DEGPh | 0.10 | 0.10 | 0.10 | | | | | | |
| | PnB | 2.00 | 1.00 | 2.00 | | | | | | |
| | PG | 3.00 | 3.00 | | 2.50 | | | | | |
| | GL | | | | | 5.10 | 10.00 | 10.00 | 10.00 | 10.00 |
| | TEG | | | 2.70 | 2.50 | | | | | |
| pH adjuster | AMP | 0.56 | 0.56 | 0.56 | 0.56 | 0.56 | 0.56 | 0.56 | 0.56 | 0.56 |
| Surfactant | SF440 | 0.50 | 0.50 | 0.50 | 0.50 | 0.50 | 0.50 | 0.50 | 0.50 | 0.50 |
| Sugar alcohol | Sorbitol | 6.00 | 6.00 | 6.00 | 6.00 | 6.00 | 6.00 | 6.00 | 6.00 | 6.00 |
| Resin 1 | | 20.0 | 20.0 | 20.0 | 20.0 | 20.0 | 20.0 | 20.0 | 20.0 | 20.0 |
| Water | | q. s. | | | | | | | | |
| Total | | 100.0 | 100.0 | 100.0 | 100.0 | 100.0 | 100.0 | 100.0 | 100.0 | 100.0 |
| Total amount of solvent(s) (%) | | 5.4 | 4.4 | 5.1 | 5.0 | 5.1 | 10.0 | 10.0 | 10.0 | 10.0 |
| Amount of solvent having boiling point of 250°C or less (%) | | 5.0 | 4.0 | 2.0 | 2.5 | 0.0 | 0.0 | 0.0 | 0.0 | 0.0 |

**[Table 4]**

| | Reference Example 1 |
|---|---|
| TF-5760 WHITE (D2B) | 25.0 |
| Glycereth-26 | 5.0 |
| PG | 10.0 |
| GL | 5.0 |
| TEA | 0.4 |
| SF465 | 0.2 |
| Resin 1 | 16.7 |
| Water | q. s. |
| Total | 100.0 |

### <Evaluation>

### [Dot Diameter Evaluation Test]

Gradation printing was performed in steps of 1% using each of the aqueous ink compositions of Examples and Comparative Examples to obtain a printed image. The printing was performed using a printing jig equipped with KJ4B, which is an inkjet head from KYOCERA Corporation, under the conditions of a frequency of 10 kHz, a binary mode (medium droplet) and a printing gap of 1 mm. As a printing medium, "OK TOPKOTE +" from Oji Paper Co., Ltd. and "Maricoat F" from Hokuetsu Corporation were used. The resulting printed image was dried in an IR heater set to 100°C for 3 seconds to obtain a test piece.

The dot diameter in the 2% density portion of the obtained test piece was measured using a printed image evaluation device PIAS-II from QEA, the obtained numerical value was rounded to the nearest whole number to obtain a value, and the value was used for the evaluation according to the following four evaluation criteria of A to D. The evaluation results are shown in Tables 5 to 7 below.

### (Evaluation Criteria: OK TOPKOTE +)

(Black)

| | |
|---|---|
| A: | 67.5 µm or more |
| B: | 65.5 µm or more and less than 67.5 µm |
| C: | 63.5 µm or more and less than 65.5 µm |
| D: | less than 63.5 µm |

(Cyan)

| | |
|---|---|
| A: | 75.0 µm or more |
| B: | 73.0 µm or more and less than 75.0 µm |
| C: | 71.0 µm or more and less than 73.0 µm |
| D: | less than 71.0 µm |

(Magenta)

| | |
|---|---|
| A: | 70.0 µm or more |
| B: | 68.0 µm or more and less than 70.0 µm |
| C: | 66.0 µm or more and less than 68.0 µm |
| D: | less than 66.0 µm |

(Yellow)

| | |
|---|---|
| A: | 67.5 µm or more |
| B: | 65.5 µm or more and less than 67.5 µm |
| C: | 63.5 µm or more and less than 65.5 µm |
| D: | less than 63.5 µm |

### (Evaluation Criteria: Maricoat F)

(Black)

| | |
|---|---|
| A: | 70.0 µm or more |
| B: | 68.0 µm or more and less than 70.0 µm |
| C: | 66.0 µm or more and less than 68.0 µm |
| D: | less than 66.0 µm |

(Cyan)

| | |
|---|---|
| A: | 77.0 µm or more |
| B: | 75.0 µm or more and less than 77.0 µm |
| C: | 73.0 µm or more and less than 75.0 µm |
| D: | less than 73.0 µm |

(Magenta)

| | |
|---|---|
| A: | 70.0 µm or more |
| B: | 68.0 µm or more and less than 70.0 µm |
| C: | 66.0 µm or more and less than 68.0 µm |
| D: | less than 66.0 µm |

(Yellow)

| | |
|---|---|
| A: | 70.0 µm or more |
| B: | 68.0 µm or more and less than 70.0 µm |
| C: | 66.0 µm or more and less than 68.0 µm |
| D: | less than 66.0 µm |

### [Color Developability Evaluation Test]

Gradation printing was performed in steps of 1% using each of the aqueous ink compositions of Examples and Comparative Examples to obtain a printed image. The printing was performed using a printing jig equipped with KJ4B, which is an inkjet head from KYOCERA Corporation, under the conditions of a frequency of 10 kHz, 12 Pl, and a printing gap of 1 mm. As a printing medium, "OK TOPKOTE +" from Oji Paper Co., Ltd., "Maricoat F" from Hokuetsu Corporation, liner paper (K Liner, grammage: 170 g/m², brown liner), and "white-ink-coated liner paper" obtained by coating the aforementioned liner paper with the aqueous white ink composition of Reference Example 1 were used. The "white-ink-coated liner paper" was produced by performing 100% solid printing twice on the liner paper under a condition of 12 Pl using a printing jig equipped with KJ4B, which is an inkjet head from KYOCERA Corporation, and then drying the liner paper. The resulting printed image was dried in an IR heater set to 100°C for 3 seconds to obtain a test piece.

The color developability (printing density) in the 100% density portion of the obtained test piece was measured using a colorimeter (SpectroEye, from X-Rite, Inc.), and the obtained numerical values were evaluated according to the following four evaluation criteria of A to D. The evaluation results are shown in Tables 5 to 7 below.

### (Evaluation Criteria: OK TOPKOTE +)

(Black)

| | |
|---|---|
| A: | 2.10 or more |
| B: | 2.00 or more and less than 2.10 |
| C: | 1.90 or more and less than 2.00 |
| D: | less than 1.90 |

(Cyan)

| | |
|---|---|
| A: | 2.00 or more |
| B: | 1.90 or more and less than 2.00 |
| C: | 1.80 or more and less than 1.90 |
| D: | less than 1.80 |

(Magenta)

| | |
|---|---|
| A: | 1.70 or more |
| B: | 1.60 or more and less than 1.70 |
| C: | 1.50 or more and less than 1.60 |
| D: | less than 1.50 |

(Yellow)

| | |
|---|---|
| A: | 1.00 or more |
| B: | 0.90 or more and less than 1.00 |
| C: | 0.80 or more and less than 0.90 |
| D: | less than 0.80 |

### (Evaluation Criteria: Maricoat F)

(Black)

| | |
|---|---|
| A: | 2.00 or more |
| B: | 1.90 or more and less than 2.00 |
| C: | 1.80 or more and less than 1.90 |
| D: | less than 1.80 |

(Cyan)

| | |
|---|---|
| A: | 1.90 or more |
| B: | 1.80 or more and less than 1.90 |
| C: | 1.70 or more and less than 1.80 |
| D: | less than 1.70 |

(Magenta)

| | |
|---|---|
| A: | 1.60 or more |
| B: | 1.50 or more and less than 1.60 |
| C: | 1.40 or more and less than 1.50 |
| D: | less than 1.40 |

(Yellow)

| | |
|---|---|
| A: | 1.05 or more |
| B: | 0.95 or more and less than 1.05 |
| C: | 0.85 or more and less than 0.95 |
| D: | less than 0.85 |

### (Evaluation Criteria: Liner Paper and White-Ink-Coated Liner Paper)

(Black)

| | |
|---|---|
| A: | 1.08 or more |
| B: | 1.07 or more and less than 1.08 |
| C: | 1.06 or more and less than 1.07 |
| D: | less than 1.06 |

(Cyan)

| | |
|---|---|
| A: | 1.00 or more |
| B: | 0.99 or more and less than 1.00 |
| C: | 0.98 or more and less than 0.99 |
| D: | less than 0.98 |

(Magenta)

| | |
|---|---|
| A: | 1.00 or more |
| B: | 0.99 or more and less than 1.00 |
| C: | 0.98 or more and less than 0.99 |
| D: | less than 0.98 |

(Yellow)

| | |
|---|---|
| A: | 0.85 or more |
| B: | 0.75 or more and less than 0.85 |
| C: | 0.65 or more and less than 0.75 |
| D: | less than 0.65 |

### [Transfer Resistance Test]

Each of the aqueous ink compositions of Examples and Comparative Examples was applied on "OK TOPKOTE +" from Oji Paper Co., Ltd., and allowed to stand at room temperature for 20 seconds to dry the ink. For the application, an automated applicator (from Tester Sangyo Co., Ltd., PI-1210) and a bar coater No. 8 were used. Immediately after the drying of the ink, a piece of blank OK TOPKOTE + paper was overlaid on the ink, and a disk-shaped weight (1 kg) was placed thereon and left to stand for 3 seconds, and then the overlaid OK TOPKOTE + was peeled off. The applied material after the peeling was captured with a scanner (from Canon Inc., imageRUNNER ADVANCE C5535F), and analyzed with image analysis software ImageJ to calculate a neutral gray value, and the value was evaluated according to the following evaluation criteria. Better evaluation is indicative of a better drying property and fixability, and thus an ink being more suitable for the gluing step and high-speed printing. For the criteria A or B, the aqueous ink composition was evaluated as having favorable transfer resistance, whereas for the criteria C or D, the aqueous ink composition was evaluated as having poor transfer resistance. The evaluation results are shown in Tables 5 to 7 below.

### (Evaluation Criteria)

(Black)

| | |
|---|---|
| A: | less than 70 |
| B: | 70 or more and less than 80 |
| C: | 80 or more and less than 90 |
| D: | 90 or more |

(Cyan)

| | |
|---|---|
| A: | less than 95 |
| B: | 95 or more and less than 105 |
| C: | 105 or more and less than 115 |
| D: | 115 or more |

(Yellow)

| | |
|---|---|
| A: | less than 180 |
| B: | 180 or more and less than 190 |
| C: | 190 or more and less than 200 |
| D: | 200 or more |

(Magenta)

| | |
|---|---|
| A: | less than 120 |
| B: | 120 or more and less than 130 |
| C: | 130 or more and less than 140 |
| D: | 140 or more |

**[Table 5]**

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Color | | Black | | | | | | | | | | | | |
| Dot diameter | OK TOPKOTE + | A | A | A | A | B | B | B | A | A | B | A | A | A |
| | Maricoat F | A | B | A | B | A | B | A | A | A | B | B | A | A |
| Color developability on coated paper | OK TOPKOTE + | A | A | A | A | A | A | A | A | A | A | A | A | A |
| | Maricoat F | A | A | A | A | A | A | A | A | A | B | A | A | A |
| Color developability on liner paper | K Liner | A | A | A | B | A | A | A | A | A | B | A | A | A |
| | White-ink-coated liner paper | A | A | A | A | A | A | A | A | A | A | A | A | B |
| Transfer resistance | OK TOPKOTE + | A | A | A | A | A | A | A | A | A | A | A | A | A |

**[Table 6]**

| | | Examples | | | | | | | | | | | |
|---|---|---|---|---|---|---|---|---|---|---|---|---|---|
| | | 14 | 15 | 16 | 17 | 18 | 19 | 20 | 21 | 22 | 23 | 24 | 25 |
| Color | | Black | | | | | | | | | Cyan | Magenta | Yellow |
| Dot diameter | OK TOPKOTE + | A | A | A | A | A | A | A | A | A | A | A | B |
| | Maricoat F | A | B | A | A | A | A | A | A | A | A | A | A |
| Color developability on coated paper | OK TOPKOTE + | A | A | A | A | A | A | A | A | A | A | A | A |
| | Maricoat F | A | A | A | A | A | A | A | A | A | A | A | A |
| Color developability on liner paper | K Liner | A | B | A | A | A | A | A | A | A | A | A | A |
| | White-ink-coated liner paper | A | A | A | A | A | A | A | A | A | A | A | A |
| Transfer resistance | OK TOPKOTE + | A | A | A | A | A | A | A | A | A | A | A | A |

**[Table 7]**

| | | Comparative Examples | | | | | | | | |
|---|---|---|---|---|---|---|---|---|---|---|
| | | 1 | 2 | 3 | 4 | 5 | 6 | 7 | 8 | 9 |
| Color | | Black | | | | | | Cyan | Magenta | Yellow |
| Dot diameter | OK TOPKOTE + | B | B | B | A | A | A | C | D | B |
| | Maricoat F | B | B | C | B | B | D | B | C | C |
| Color developability on coated paper | OK TOPKOTE + | B | A | B | A | A | D | A | B | A |
| | Maricoat F | C | A | A | C | A | D | A | C | B |
| Color developability on liner paper | K Liner | B | B | B | C | B | D | A | A | A |
| | White-ink-coated liner paper | A | D | D | D | D | D | A | B | A |
| Transfer resistance | OK TOPKOTE + | D | B | A | D | C | D | A | A | A |

As shown in Tables 5 to 7, the aqueous ink compositions of Examples 1 to 25 exhibited large dot diameters and favorable color developability in inkjet printing. In particular, the aqueous ink compositions of Examples 1 to 25 exhibited favorable color developability even in the inkjet printing on the ink layer of the aqueous white ink composition. In addition, the aqueous ink compositions of Examples 1 to 25 hardly caused the transfer even in the printing on the surface-coated substrate.

## Claims

1. An aqueous ink composition comprising a non-white colorant, a water-soluble organic solvent, a humectant, a surfactant, and water, wherein
the humectant comprises a sugar alcohol,
the water-soluble organic solvent comprises one or more specific solvents having a ClogP value of 0.5 or more and 2.0 or less,
a content of the water-soluble organic solvent is more than 0% by mass and 5% by mass or less, and
a content of the water-soluble organic solvent having a boiling point at 1 atm of 250°C or less is 3% by mass or less.

2. The aqueous ink composition according to claim 1, wherein a content of the sugar alcohol is 4% by mass or more and 10% by mass or less.

3. The aqueous ink composition according to claim 1, wherein the sugar alcohol comprises sorbitol.

4. An ink set comprising the aqueous ink composition according to any one of claims 1 to 3, and an aqueous white ink composition comprising a white colorant and water.

5. The ink set according to claim 4, wherein the white colorant comprises titanium oxide.

6. A method for producing an inkjet-printed matter, the method comprising: ejecting droplets of the aqueous ink composition according to any one of claims 1 to 3 from an inkjet head; and attaching the droplets to a printing medium to obtain a printed matter.

7. The method for producing an inkjet-printed matter according to claim 6, wherein the printing medium is at least one selected from a group consisting of cardboard, liner paper, and coated cardboard.

8. The method for producing an inkjet-printed matter according to claim 6, wherein the printing medium is coated paper.

9. A method for producing an inkjet-printed matter, the method comprising, in sequential order: a printing step of ejecting droplets of the aqueous ink composition according to any one of claims 1 to 3 from an inkjet head in a single-pass manner and attaching the droplets to liner paper or coated cardboard to obtain a printed matter; and a gluing step of gluing the printed matter and a corrugating medium together to obtain a cardboard sheet.

10. The method for producing an inkjet-printed matter according to claim 9, wherein the printing step comprises attaching droplets of an aqueous white ink composition comprising a white colorant and water to the liner paper or the coated cardboard, and subsequently attaching the droplets of the aqueous ink composition to the liner paper or the coated cardboard to obtain the printed matter.
